# EUROPÄISCHE PATENTSCHRIFT

(11) **EP 0 690 825 B1**
(45) Veröffentlichungstag und Bekanntmachung des Hinweises auf die Patenterteilung: **02.06.1999**
(21) Anmeldenummer: 94909897.4
(22) Anmeldetag: 01.03.1994
(51) Int. Cl.: C02F 1/72, C02F 1/70, B01J 2/04, B01J 37/00

(54) **VERFAHREN ZUR KATALYTISCHEN BEHANDLUNG VON ORGANISCHE UND ANORGANISCHE VERBINDUNGEN ENTHALTENDEN ABWÄSSERN, VORZUGSWEISE AUS DER EPICHLORHYDRINPRODUKTION**
CATALYTIC TREATMENT PROCESS FOR EFFLUENTS CONTAINING ORGANIC AND INORGANIC COMPOUNDS, PREFERABLY FROM EPICHLORHYDRINE PRODUCTION
PROCEDE DE TRAITEMENT CATALYTIQUE DES EFFLUENTS CONTENANT DES COMPOSES ORGANIQUES ET INORGANIQUES, DE PREFERENCE RESULTANT DE LA PRODUCTION D'EPICHLORHYDRINE

(30) Priorität: 05.03.1993 DE 4306875; 18.02.1994 DE 4405202
(43) Veröffentlichungstag der Anmeldung: 10.01.1996
(73) Patentinhaber: Solvay Deutschland GmbH, D-30173 Hannover (DE)
(72) Erfinder: DERLETH, Helmut, D-31582 Nienburg (DE); BRETZ, Karl-Heinz, D-31582 Nienburg (DE); NEUENFELDT, Gerhard, D-31629 Estorf (DE); SCHINDLER, Hubert, D-31311 Uetze (DE); OTTMANN, Alfred, D-30627 Hannover (DE)
(74) Vertreter: Lauer, Dieter, Dr.
(86) Internationale Anmeldenummer: EP9400586
(87) Internationale Veröffentlichungsnummer: WO9420423

(56) Entgegenhaltungen:
- EP-A- 0 359 074
- FR-A- 2 397 231
- DATABASE WPI Derwent Publications Ltd., London, GB; AN 76-15946 & JP,A,51 005 864 (CHISSO CORP.)

## Beschreibung

Die Erfindung betrifft ein Verfahren zur katalytischen Behandlung von Abwässern, die insbesondere halogenorganische und gegebenenfalls anorganische Verbindungen enthalten, unter Verwendung eines geträgerten Edelmetallkatalysators.

Die bekannten Verfahren zur katalytischen Behandlung von Abwässern, die halogenorganische, insbesondere chlororganische Verbindungen (AOX) enthalten, setzen z. B. Alkali- oder Erdalkaliverbindungen oder Edelmetalle oder Edelmetallverbindungen als Katalysator ein. So ist bekannt, daß der Abbau der im Abwasser enthaltenden chlororganischen Verbindungen in Gegenwart von Platin, Palladium oder Rhodium sehr gut gelingt, wobei Palladium die größte Aktivität besitzt. Weitere Untersuchungen zeigten, daß die Wahl des Trägermaterials für die Katalysatoraktivität nicht zu unterschätzen ist. So ist bekannt, daß Palladium auf Aluminiumoxid als Träger eine geringere Aktivität als Palladium auf Kohlenstoff als Träger besitzt (AIChE 38(7), 1992).

Aufgabe der Erfindung ist die Entwicklung eines Verfahrens zur Abwasserbehandlung unter Verwendung eines geträgerten Edelmetallkatalysators mit verbesserter Aktivität.

Erfindungsgemäß wird die Aufgabe dadurch gelöst, daß das Abwasser in Gegenwart von Wasserstoff an einen geträgerten Edelmetallkatalysator, dessen Trägermaterial anorganisches Oxid und Kohlenstoff enthält, behandelt wird. Als anorganisches Oxid werden erfindungsgemäß vorzugsweise Oxide von Aluminium, Magnesium, Zirkon, Silicium, Titan allein oder in Kombination miteinander verstanden. Vorzugsweise enthält der Katalysatorträger Siliciumdioxid als oxidischen Bestandteil. In einer bevorzugten Variante beträgt der Oxidanteil des Trägers mindestens 50 Gew.-%, vorzugsweise 55 bis 85 Gew.-%.

Als aktive Komponente enthält der Katalysator Metalle der achten Nebengruppe des PSE, z. B. Platin, Palladium, Iridium oder Rhodium, vorzugsweise Palladium, allein oder in Kombination miteinander.

Das Abwasser, insbesondere Abwasser aus der Epichlorhydrinherstellung, mit einem pH-Wert von 3 bis 10, vorzugsweise 4 bis 6, wird in mindestens einen Reaktor, in dem sich der geträgerte Edelmetallkatalysator befindet, eingeleitet und bei 5 bis 80 °C, vorzugsweise 10 bis 30 °C und 1 bis 10 bar mit Wasserstoff behandelt.

Die Einstellung des pH-Wertes erfolgt in an sich bekannter Weise.

So wird z. B. vor der Behandlung von Abwasser aus der Epichlorhydrinproduktion, das üblicherweise einen pH-Wert von 11 bis 13 aufweist, durch Zugabe von Säure, vorzugsweise Salzsäure, der pH-Wert des Abwassers auf einen Wert ≥ 3 bzw. ≤ 10 eingestellt.

Es hat sich als zweckmäßig erwiesen, die Behandlung in Gegenwart einer solchen Menge Wasserstoff durchzuführen, die mindestens der stöchiometrisch berechneten Menge des zu entfernenden AOX-Gehaltes entspricht.

Die Löslichkeit des Wasserstoffgases in dem Wasser liegt bei Normaldruck und Temperaturen zwischen 10 °C und 25 °C unter 1,7 mg/l und erhöht sich proportional zum Arbeitsdruck.

Die Abbauleistung kann je nach der Anfangskonzentration der chemischen Natur der halogenorganischen Verbindungen, dem pH-Wert, der Wasserstoffgaskonzentration bzw. -begasungsrate und der Temperatur variieren.

Mit einem Palladiumträgerkatalysator mit 0,5 oder 1 % Palladium können z. B. Abbauleistungen von 0,5 - 4 mg AOX pro Stunde und g Katalysator erzielt werden.

Der Wassertoffeintrag in das Abwasser kann entweder durch direktes Einleiten von Wasserstoffgas oder mittels eines Membranmoduls erfolgen.

Besonders geeignet sind Membranen mit integralsymmetrischem Aufbau und insbesondere Kompaktmembranen. Diese Membranen besitzen eine poröse wasserbeständige Trägerstruktur und mindestens eine Schicht aus wasserbeständigem porenfreien Polymer, an der das zu begasende Abwasser vorbeigeführt wird. Diese porenfreie Schicht besteht z. B. aus Silikonpolymer.

Andere Methoden, z. B. über Gassättiger, sind ebenfalls zum Wasserstoffeintrag geeignet.

Der Wasserstoffeintrag kann entweder gleichzeitig mit dem Kontaktieren des Abwassers mit dem Katalysator erfolgen oder getrennt. In einer bevorzugten Variante erfolgt der Wasserstoffeintrag, bevor das Abwasser mit dem Katalysator in Kontakt kommt.

In einer bevorzugten Ausführungsform der Erfindung wird ein Träger auf der Basis anorganischer Oxide verwendet, der nach dem Sol-Gel-Verfahren hergestellt wurde. Zur Herstellung des Trägermaterials wird zunächst eine flüssige alkalische Komponente mit- einer flüssigen sauren Komponente zu einem Sol vereinigt. Dieses Sol kann in an sich bekannter Weise zu Formkörpern verfestigt werden, z. B. durch Eintragen in ein Formöl-Bad. Die verfestigten Solteilchen werden anschließend gealtert, gewaschen, getrocknet und kalziniert.

Als Sol ist sowohl ein instabiles Sol, das sofort nach Zusammenfügen der Komponenten geliert, als auch ein metastabiles Sol, das noch einige Zeit im fließfähigen Zustand verbleibt, zu verstehen.

In einer bevorzugten Variante erfolgt die Sol-Gel-Umwandlung, indem ein Sol in eine ein Reaktionsgas enthaltende Reaktionszone von unten so einsprüht wird, daß das Sol unmittelbar vor oder erst bei Eintritt in die Reaktionszone in einzelne Solperlen aufreißt und die gebildeten Solperlen auf einer gekrümmten Flugbahn die Reaktionszone durchfliegen, wobei sie vorverfestigt werden, und man anschließend die vorverfestigten Solteilchen in einer Auffangsvorrichtung auffängt. Durch diese Verfahrensweise werden Ort und Zeitpunkt der Solperlenbildung auf den Beginn der Gelierung (Vorverfestigung) der Solperlen in vorteilhafter Weise abgestimmt. Die Solperlen, die im Zeitpunkt ihrer Entstehung noch flüssige Soltropfen mit nahezu idealer Kugelform und weitgehend gleichem Kugeldurchmesser sind, werden beim Durchfliegen der Reaktionszone in ihrer nahezu idealen gleichmäßigen Kugelform fixiert, d. h. vorverfestigt, so daß sie vor deformativen Einwirkungen weitgehend geschützt sind, bevor durch weitere an sich bekannte Maßnahmen des Sol-Gel-Verfahrens die in ihrer Kugelform vorverfestigten Solperlen abschließend stabil gefestigt werden. Hierzu wird die Einsprühvorrichtung in einem bestimmten Abstand unterhalb der Eintrittsöffnung in die Reaktionszone angeordnet, wobei der Abstand in etwa derjenigen Entfernung, ausgehend von der Sprühvorrichtung, entspricht, in welchem das Sol in Solperlen aufreißt. Zusätzlich wird das Sol aus der Sprühvorrichtung von unten, d. h. entgegen der Schwerkraft, unter einem bestimmten Winkel α in die Reaktionszone eingesprüht, wobei Winkel α hierbei aus einer horizontalen, senkrecht zur Schwerkraft liegenden Achse und der Tangente des versprühten Sols im Austrittspunkt aus dem Sprühsystem gebildet wird.

Nach dem bevorzugten Verfahren wird ein gelierfähiges Sol von unten nach oben in die Reaktionszone, insbesondere unter einem Winkel α < 90°, eingesprüht. Als Sprühvorrichtung können dabei je nach Teilchengrößenbereich Spritzen mit Kanülen unterschiedlichen Durchmessers oder an sich bekannte Sprühdüsen, Sprühräder, Ultraschalldüsen, Turboglocken, mechanisch angetriebene Düsen oder Sprühsysteme, wie man sie bei der elektrostatischen Versprühung oder in Jet-Printern (z. B. piezoerregte Düsen) verwendet, eingesetzt werden. Der Teilchengrößenbereich wird dabei über die eingesetzte Sprühvorrichtung variiert. Bei einer gewünschten Teilchengröße im Bereich von 0,01 mm bis 0,3 mm werden daher zweckmäßigerweise Turboglocken oder Sprühdüsen, z. B. an sich bekannte Spiraldüsen (z. B. Spiraldüsen der Firma Spraybest) oder vorzugsweise Ultraschalldüsen eingesetzt. Bei einer gewünschten Teilchengröße im Bereich von 0,3 mm bis 5 mm, insbesondere 0,3 mm bis 3,5 mm, verwendet man zweckmäßigerweise Sprühräder oder bevorzugt Kanülen entsprechenden Durchmessers. Bei sehr geringen Abstand der Sprühvorrichtung zur Eintrittsöffnung der das Reaktionsgas enthaltenden Reaktionszone kann es zweckmäßig sein, z. B. bei der Verwendung von Sprühdüsen oder Kanülen mit kleinem Durchmesser, die Sprühvorrichtung mit einem Spülgas (z. B. Druckluft oder Wasserdampf) anzublasen, um somit eine Verstopfung der Sprühvorrichtung durch zu früh gelierendes Sol zu vermeiden.

Das Sol kann dabei als instabiles Sol, welches durch Zusammenfügen zweier Komponenten erhalten wurde, als auch als selbstgelierendes Sol oder metastabiles Sol, welches noch längere Zeit fließfähig ist, vorliegen. Insbesondere eignet sich dieses Verfahren zur Herstellung von Teilchen auf Basis anorganischer Oxide durch Sol-Gel-Umwandlung. Anorganische Oxide sind dabei insbesondere die Oxide aus der Gruppe Magnesiumoxid, Aluminiumoxid, Siliciumdioxid, Alumosilikat, Zinkoxid, Titandioxid, Chromoxid, Kupferoxid, Manganoxid, Ceroxid, Zinnoxid, Eisenoxid, Nickeloxid, Bleioxid, Molybdänoxid, Vanadiumoxid, Thoriumoxid, Zirkoniumoxid und/oder Hafniumoxid. Bevorzugte Oxide sind Alumosilikat, Aluminiumoxid und/oder Siliciumdioxid. Der Begriff anorganisches Oxid umfaßt hierbei sowohl die genannten Metalloxide jeweils für sich allein als auch Mischoxide, insbesondere binäre oder tertiäre Mischoxide, deren einer Bestandteil Siliciumdioxid, Aluminiumoxid oder Alumosilikat ist. Unter anorganischen Oxiden werden auch solche Oxide verstanden, die neben den gelbildenden oxidischen Komponenten weitere die anwendungstechnischen und/oder katalytischen Eigenschaften verbessernde Zusätze enthalten.

Vorzugsweise werden nach dieser Vorgehensweise Teilchen auf der Basis von Siliciumdioxid hergestellt. So kann z. B. ein Siliciumdioxid enthaltendes Sol erhalten werden, indem man als alkalische Komponente eine wäßrige Lösung eines Alkalimetallsilikates, z. B. eine Natriumsilikatlösung, mit der wäßrigen Lösung einer anorganischen Säure, z. B. einer wäßrigen Schwefelsäure- oder Salzsäure-Lösung, oder einer organischen Säure, z. B. einer wäßrigen Ameisensäure- oder Essigsäurelösung in an sich bekannter Weise miteinander vermischt. Sowohl der alkalischen als auch der sauren Komponente können dabei noch weitere Bestandteile, beispielsweise Aluminium- oder Magnesiumverbindungen beigefügt sein. In einer anderen Variante kann ein Siliciumdioxid enthaltendes instabiles Sol erhalten werden, indem man Kieselsäurealkylester mit einer alkalischen Komponente, z. B. NaOH, NH₃ oder einer sauren Komponente, z. B. Salzsäure oder Siliciumtetrachlorid mit einer sauren Komponente, z. B. Ameisensäure umsetzt. Eine weitere Möglichkeit zur Herstellung Siliciumdioxid enthaltender Teilchen besteht in der Verwendung von metastabilem Kieselsol (z. B. Bayer S200^{R}).

Nach diesem Verfahren können auch Sole eingesetzt werden, welche weitere Komponenten in homogener oder heterogener Form enthalten. Als heterogene Komponenten können sie z. B. Feinanteile jeder an sich bekannten Art, Menge und Teilchengröße enthalten. Zur Verbesserung der anwendungstechnischen Eigenschaften können z. B. als Feinanteile Füllstoffe beigefügt sein; z. B. Füllstoffe aus der Gruppe Kieselsäuren, Alumosilikate, Aluminiumoxide, Titandioxid, Kaolin, Montmorillonit, Bentonit, Zeolith, Stärke, Holzmehl oder Kohlenstoff. Diese Füllstoffe können der sauren und/oder alkalischen Komponente in kristalliner oder amorpher Form oder auch in hochdisperser Form, wie es in der DE 42 16 868 beschrieben wird, zugefügt werden. Auch Feinanteile, die die katalytischen Eigenschaften der Teilchen verändern, können auf an sich übliche Weise eingesetzt werden. Als homogene Komponenten können so z. B. Magnesium-, Zirkonium-, Kupfer-, Blei-oder Titanacetylacetonate zugesetzt sein. Im Sinne der Erfindung wird bevorzugt Kohlenstoff als Zuschlagstoff beigefügt.

Die Vermischung der alkalischen Komponente mit der sauren Komponente zu einem gelierfähigen instabilen Sol kann auf an sich bekannte Weise in jeder hierfür geeigneten Mischvorrichtung, z. B. einer Mischdüse, durchgeführt werden. Anschließend wird das so erhaltene Sol unmittelbar in eine Sprühvorrichtung gepumpt, mit der es auf erfindungsgemäße Weise von unten in das Reaktionsgas eingesprüht werden kann.

Durch ein Sprühsystem wird das gelierfähige Sol von unten nach oben in einem Winkel alpha < 90°, z. B. einem Winkel von 40 bis 89°, vorzugsweise 80 bis 88°, in die Reaktionszone so eingesprüht, daß das Sol nach dem Verlassen des Sprühsystems erst unmittelbar vor oder beim Passieren der Eintrittsöffnung in die Reaktionszone in weitgehend gleichgroße Solperlen aufgerissen wird, wobei die Solperlen im Augenblick ihrer Bildung praktisch sofort der gelierenden Wirkung des Reaktionsgases ausgesetzt sind. Der Zerfall des Sols in einzelne Solperlen hängt neben dem Winkel dabei von der Viskosität des Sols, der jeweils eingesetzten Sprühvorrichtung sowie dem Druck, mit dem das Sol die Sprühvorrichtung verläßt, ab. Um den Punkt, an dem das Sol in einzelne Solperlen aufreißt, einzustellen, wird der Abstand zwischen Sprühvorrichtung und Eintrittsöffnung in die Reaktionszone zu Beginn des Sprühvorganges vom Fachmann durch Inaugenscheinnahme so variiert, d. h. der Abstand vermindert oder gegebenenfalls vergrößert, bis der Aufreißpunkt des Sols in einzelne Solperlen sich unmittelbar vor oder in der Eintrittsöffnung zur Reaktionszone befindet.

Nach Eintritt in die Reaktionszone durchfliegen die gebildeten Solperlen eine in Form einer Parabel gekrümmte Flugbahn durch das sich in der Reaktionszone befindliche Reaktionsgas, wobei sie in ihrer Kugelform fixiert, d. h. vorverfestigt werden. Dadurch, daß die Solperlen diese parabelförmige Flugbahn durch das Reaktionsgas passieren müssen, kann das Reaktionsgas nach diesem Verfahren besonders lange zur Vorverfestigung der Solperlen beitragen, so daß dadurch die Gefahr der Deformation der Solperlen beim Auftreffen auf die Auffangvorrichtung bereits weitgehend minimiert ist. Um die Gefahr der Deformation noch weiter zu verringern, kann gewünschtenfalls eine in der Höhe verstellbare Auffangvorrichtung nahe an den Umkehrpunkt der parabelförmigen Flugbahn der Solperlen, an dem die Solperlen ihre geringste kinetische Energie besitzen, herangebracht werden.

Als Auffangvorrichtung kann eine flachgezogene Folie, z. B. eine PVDF-Folie oder PE- oder PVC-Folie oder ein mit festem Kohlendioxid gefüllter Auffangbehälter oder ein mit Flüssigkeit gefüllter Auffangbehälter eingesetzt werden. Vorzugsweise verwendet man in einer Verfahrensvariante ein mit festem CO₂ gefüllten Auffangbehälter; hierbei kann durch das für festes Kohlendioxid bekannte Leidenforst-Phänomen die kinetische Energie der Solteilchen beim Aufprall noch weiter vermindert werden. Besonders bevorzugte Verfahrensvarianten verwenden als Auffangvorrichtung einen mit einer Flüssigkeit, insbesondere mit einer Reaktionsflüssigkeit, gefüllten Auffangbehälter. Unter Reaktionsflüssigkeiten werden dabei alle üblichen sauren bzw. alkalischen Flüssigkeiten verstanden, wie sie üblicherweise für die Alterung von Teilchen nach dem Sol-Gel-Verfahren eingesetzt werden. Gebräuchliche Reaktionsflüssigkeiten sind hierfür z. B. wäßrige Ammoniaklösung, z. B. eine 5 bis 10 %ige wäßrige Ammoniaklösung, oder saure Reaktionsflüssigkeiten wie Salzsäure, Schwefelsäure oder Salpetersäure in Konzentrationen von 1 bis 5 Gew.-%. Bei Verwendung einer Reaktionsflüssigkeit sollten zweckmäßigerweise in der Reaktionszone hierzu äquivalente Reaktionsgase eingesetzt werden. Legt man als Reaktionsflüssigkeit z. B. eine wäßrige Ammoniaklösung vor, so sollten als Reaktionsgas Ammoniak-Gas oder Dämpfe organischer Amine eingesetzt werden. Bei Verwendung saurer Reaktionsflüssigkeiten wie Salzsäure, Schwefelsäure oder Salpetersäure sollten die hierzu äquivalenten sauren Reaktionsgase, also Chorwasserstoff, Schwefeldioxid bzw. Stickoxide verwendet werden.

Das verwendete Reaktionsgas kann in der Reaktionszone als geschlossenem Behältnis über der entsprechenden Auffangvorrichtung leicht gehalten werden. Frisches Reaktionsgas kann dabei nach Bedarf ständig durch eine separate Gaszufuhr in die Reaktionszone nachgefüllt werden. Neben den bereits genannten alkalischen bzw. sauren Reaktionsgasen können bei der Verwendung selbstgelierender Sole als Reaktionsgase auch inerte Gase wie Luft oder Stickstoff eingesetzt werden. Gegebenenfalls kann die Vorverfestigung der Solteilchen beim Durchfliegen der gekrümmten Flugbahn durch das Reaktionsgas durch Erwärmen der Reaktionszone unterstützt werden. Zweckmäßigerweise erwärmt man hierfür die Reaktionszone auf Temperaturen von bis zu 120 °C, vorzugsweise 80 bis 100 °C. Bei Verwendung von einem mit festem Kohlendioxid gefüllten Auffangbehälter als Auffangvorrichtung kann die Reaktionszone auch auf Temperaturen unterhalb der Raumtemperatur gekühlt werden, um auf diese Weise durch Erniedrigung der Viskosität die Vorverfestigung der Solteilchen zu unterstützen.

Von der Auffangvorrichtung können die vorverfestigten Solteilchen der Aufarbeitung, wie sie üblicherweise für nach dem Sol-Gel-Prozeß hergestellten Teilchen durchgeführt werden, zugeführt werden. Diese Aufarbeitung umfaßt üblicherweise die Aufarbeitungsschritte Waschen, Trocknen und gegebenenfalls Kalzinieren. So werden die Solteilchen üblicherweise bei Temperaturen im Bereich von 100 bis 200 °C für eine Zeitdauer von 1 bis 24 Stunden getrocknet. In einer Variante können die vorverfestigten Solteilchen bei Verwendung einer flachgezogenen Folie oder eines mit festem Kohlendioxid gefüllten Auffangbehälters als Auffangvorrichtung auch direkt, z. B. durch eine Saugvorrichtung, in eine Trocknungseinheit, z.B. in einen an sich bekannten Sprühtrockner, überführt werden.

Zur Herstellung besonders kleiner Teilchen, insbesondere von Teilchen mit einem Durchmesser im Bereich von 0,001 mm bis 0,3 mm, wird zweckmäßigerweise eine abgewandelte Vorrichtung eingesetzt, wobei die Sprühvorrichtung eine Nebelkammer umfaßt. In dieser Verfahrensvariante werden durch eine Düse, zweckmäßigerweise eine Spiraldüse oder vorzugsweise eine Ultraschalldüse kleine Solperlen erzeugt, welche in der Nebelkammer nach unten sinken und von einer Sprühvorrichtung z. B. einem aus Lüftungsanlagen bekannten Flügelventilator, angesaugt und dann von unten nach oben in die das Reaktionsgas enthaltende Reaktionszone eingesprüht werden. Die weiteren Schritte erfolgen dann analog.

Die nach den vorstehenden Verfahrensvarianten erhaltenen kugelförmigen Teilchen können in einer weiteren Ausgestaltung noch einer Behandlung mit einem niederen Alkylalkohol, insbesondere einem C₁- bis C₄-Alkohol, wie z. B. Methanol, Ethanol, Propanol oder Isopropanol oder einer Behandlung mit Aceton unterzogen werden, bevor sie nach dem Auffangen in der Auffangvorrichtung der Trocknung zugeführt werden. Vorzugsweise setzt man Isopropanol, welches möglichst wasserfrei sein sollte, für diese Behandlung ein. Durch die Behandlung mit einem niederen Alkylalkohol oder Aceton kann zum einen in vorteilhafter Weise ein Verkleben der erhaltenen Teilchen, insbesondere von Teilchen mit einem durchschnittlichen Durchmesser kleiner 1 mm beim Trocknen vermieden werden, zum anderen kann durch diese Behandlung das Porenvolumen der erhaltenen Teilchen aufgeweitet werden. Hierfür werden die Teilchen aus der Auffangsvorrichtung in ein Behältnis überführt und für eine Zeitdauer von 1 Minute bis 24 Stunden, zweckmäßigerweise 2 bis 3 Stunden, mehrmals mit Alkohol überschichtet. So kann z. B. durch diese Behandlung das Porenvolumen gezielt verändert werden.

Durch das erfindungsgemäße Verfahren ist es in vorteilhafter Weise möglich, Teilchen auf der Basis anorganischer Oxide mit einer sehr gleichmäßigen Kugelgestalt einer engen Verteilung der Porendurchmesser sowie einem sehr engen Kornspektrum zu erhalten. Hierbei kann der Anfall größerer Mengen an Unter- bzw. Überkorn weitgehend vermieden werden. Unter einem engen Kornspektrum wird dabei ein Kornspektrum verstanden, bei dem 80 % der Teilchen einen Durchmesser innerhalb des in der nachfolgenden Tabelle angegebenen Bereichs um den jeweiligen mittleren Durchmesser aufweisen (Gaußverteilung).

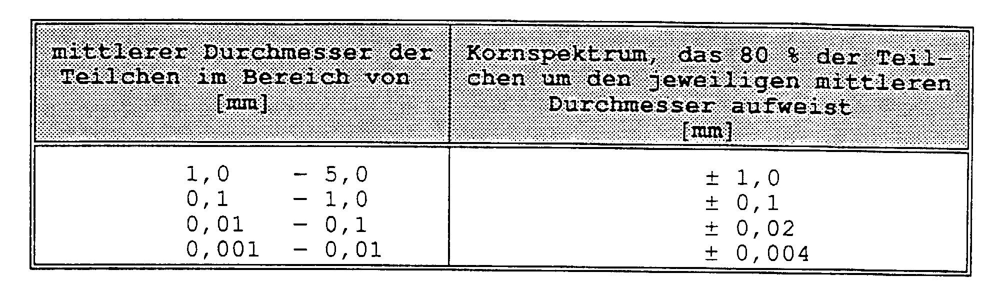

Vorteilhafterweise braucht kein Formöl eingesetzt zu werden, so daß die so hergestellten Teilchen auch frei von weiteren Verunreinigungen oder Verfärbungen sind. Auch läßt sich bei nach diesem Verfahren hergestellten Teilchen durch eine Behandlung mit Aceton oder einem niederen Alkylalkohol vor dem Trocknen das Porenvolumen in vorteilhafter Weise aufweiten. Darüber hinaus zeigen die so hergestellten kugelförmigen Teilchen eine überraschend hohe Abriebfestigkeit.

Die so hergestellten kugelförmigen Teilchen auf Basis anorganischer Oxide, vorzugsweise auf Basis von Siliciumdioxid, weisen
a) einen Durchmesser im Bereich von 0,01 bis 5 mm, vorzugsweise 0,02 bis 3,5 mm,
b) eine spezifische Oberfläche im Bereich von 1 bis 900 m²/g, vorzugsweise 100 bis 800 m²/g,
c) ein Schüttgewicht im Bereich von 0,1 bis 1,0 g/ml,
d) ein Porenvolumen im Bereich von 0,25 bis 2,5 ml/g,
e) eine Verteilung der Porendurchmesser mit einem Maximum (monomodale Porenverteilung) im Bereich von 15 bis 2000 Å, vorzugsweise 15 bis 400 Å,
auf.

Die spezifische Oberfläche, das Porenvolumen und die Porenverteilung dieser Teilchen kann durch Quecksilber-Porosimetrie oder Aufnahme und Auswertung von Stickstoff-Adsorptionskurven auf an sich bekannte Weise bestimmt werden. Das Maximum der Porendurchmesser und der mittlere Porendurchmesser lassen sich dann hieraus ermitteln.

Bevorzugt zeigen diese Teilchen eine monomodale Porenverteilung, bei der 80 %, vorzugsweise 95 %, der Porendurchmesser der Formel 0,8 R ≤ R ≤ 1,2 R entsprechen, wobei R dem mittleren Porendurchmesser im Bereich von 15 bis 400 Å entspricht.

Neben einer besonders gleichmäßigen Kugelform und engem Kornspektrum zeichnen diese Teilchen sich durch ein hohes Porenvolumen bei einer ungewöhnlich engen Verteilung der Porendurchmesser aus. Hierbei ist besonders vorteilhaft, daß mindestens 80 %, vorzugsweise 95 %, der Teilchen einen Porendurchmesser aufweisen, der im bereits angegebenen Toleranzbereich von 0,8 R ≤ R ≤ 1,2 R liegt. Der Anteil von Makroporen, d. h. von Poren mit einem Durchmesser von über 200 Å, liegt dabei unter 5 %. Diese Teilchen weisen damit eine besonders homogene Oberfläche auf, was besonders für deren Verwendung als Katalysatorträger sehr vorteilhaft ist. Eine weitere besondere Eigenschaft der erfindungsgemäßen Teilchen besteht darin, daß sie bei ihrem hohen Porenvolumen eine überraschend hohe Abriebfestigkeit zeigen, was sie im Zusammenhang mit der hohen Schüttdichte besonders geeignet für die Verwendung als Katalysatoren oder Katalysatorträger in Fließbett- bzw. Wirbelschichtreaktoren macht.

Es wurde gefunden, daß nach dem Sol-Gel-Verfahren hergestellte Teilchen insbesondere auf der Basis von Siliciumdioxid und Kohlenstoff als Füllstoff, wobei der Gehalt an Siliciumdioxid mindestens 50 Gew.-%, vorzugsweise 55 bis 85 Gew.-%, beträgt, sich als Katalysatorträger für die katalytische Behandlung von halogenorganischen Verbindungen enthaltenden Abwässern eignet.

Erfindungsgemäß werden z. B. mit Edelmetallen oder Übergangsmetallen dotierte Katalysatoren verwendet, welche die nach dem genannten Verfahren hergestellten Teilchen als Katalysatorträger enthalten. Beispielsweise können sie Edelmetalle wie Gold, Silber, Platin, Rhodium oder Palladium oder Übergangsmetalle wie Kupfer, vorzugsweise Palladium, enthalten. Der Gehalt an solchen Metallen liegt üblicherweise im Bereich von 0,1 bis 5 Gew.-%, bezogen auf den fertigen Katalysatorträger. Weiterhin können auch Metallverbindungen, z. B. Oxide von Metallen, insbesondere Oxide von Übergangsmetallen, z. B. Oxide von Mangan, Eisen, Nickel oder Kobalt, enthalten sein. Natürlich können auch Gemische von Metallen, Gemische von Metallverbindungen oder Gemische von einem oder mehreren Metallen und einem oder mehreren Metallverbindungen auf dem Träger aufgebracht sein. Beispielsweise kann die Metallkomponente des Katalysators aus Palladium und/oder Rhodium oder aus Palladium und Kupfer bestehen. Vorzugsweise wird jedoch Palladium als Metallkomponente verwendet. Die Herstellung der erfindungsgemäßen Katalysatoren kann auf an sich bekannte Weise erfolgen. Beispielsweise kann man Metallsalze oder komplexe Metallverbindungen im Imprägnierverfahren, Sprühverfahren oder Fällungsverfahren auf die Teilchen aufbringen und nach Trocknung und Kalzinierung gewünschtenfalls reduzieren. Bevorzugt werden die Metalle durch ein Imprägnierverfahren, z. B. mit einer Lösung oder Suspension von Metallsalzen oder komplexen Metallverbindungen in Wasser oder einem organischen Lösungsmittel, auf die Teilchen aufgebracht. Ein Vorteil der auf Basis der erfindungsgemäß hergestellten Teilchen erhaltenen Katalysatoren ist deren hohe Abriebfestigkeit.

Zur Herstellung von palladiumenthaltenden Trägerkatalysatoren imprägniert man den Träger mit einer wäßrigen Lösung einer löslichen Palladiumverbindung, mit anschließender Trocknung und Glühung. Vorzugsweise wird der Träger zunächst mit einer wäßrigen Lösung einer Palladiumverbindung, imprägniert, dann getrocknet und geglüht (kalziniert) und gegebenenfalls reduziert.

Erfindungsgemäß kann die Behandlung des Abwassers unter Verwendung des erfindungsgemäßen geträgerten Edelmetallkatalysators im Festbett, Wirbelbett, Suspensionsbett als auch im Fließbett erfolgen.

Beim Festbettverfahren wird das Wasser durch eine oder mehrere Reaktionseinheiten aus Wasserstoffbegasungsbehälter und Festbettreaktor, in dem sich der Katalysator befindet, geleitet.

Die Anlage kann übliche Meßeinrichtungen umfassen, z. B. Durchflußmeßgeräte, Druckmeßgeräte, pH-Meßgeräte, Temperaturmeßgeräte.

Für die Durchführung des Verfahrens in der Wirbelschicht oder Suspensionsschicht ist eine Druckerhöhungseinrichtung, die zweckmäßigerweise mit einer Wasserstoffeintragsvorrichtung verbunden ist, erforderlich, die das Wasser in den Wirbelbett-, Suspensionsbett- oder Fließbettreaktor, in dem sich der erfindungsgemäße Trägerkatalysator befindet, leitet.

Die Anlage kann u. a. Filtereinrichtung, Dosierbehälter, pH-Meß- und Regeleinrichtung und Meßstellen zur Bestimmung analytischer Daten des Wassers aufweisen.

Die nachfolgenden Beispiele sollen die Erfindung erläutern, jedoch nicht einschränken.

### Beispiel 1:

In einem Festbettreaktor befand sich 1 g Katalysator, dessen Trägermaterial gemäß dieser Erfindung hergestellt wurde und zu 60 % aus Siliciumdioxid und 40 % Kohlenstoff bestand. Auf dieses Trägermaterial wurde 0,5 Gew.-% Pd aufgebracht. In dieser Apparatur wurde Abwasser aus der Epichlorhydrinsynthese, dessen pH-Wert mit 4,5 eingestellt wurde, zunächst mit Wasserstoff gesättigt und anschließend katalytisch bei Umgebungstemperatur und einem Vorsäulendruck von 1,5 bar dehalogeniert. Der Durchfluß durch den Reaktor betrug 100 ml/h. Vor der Behandlung hatte das Abwasser einen AOX-Gehalt von 31,6 mg/l; nach der Behandlung hatte das Abwasser einen AOX-Gehalt von 2 mg/l.

### Beispiel 2:

Ein Rührreaktor wurde mit 300 ml Abwasser aus der Epichlorhydrinsynthese, dessen pH-Wert auf 4,5 eingestellt wurde, gefüllt. Es wurde 1 g Katalysator, dessen Trägermaterial gemäß dieser Erfindung hergestellt wurde und zu 60 % aus Siliciumdioxid und 40 % Kohlenstoff bestand und mit 1 Gew.-% Pd belegt war, in die Flüssigkeit gegeben. Durch eine G4-Fritte wurde Wasserstoffgas in die Lösung eingetragen. Unter Rühren erfolgte die katalytische Umsetzung der halogenorganischen Verbindungen bei Umgebungstemperatur und Normaldruck. Vor der Behandlung hatte das Abwasser einen AOX-Gehalt von 24,5 mg/l. Nach 2 h Reaktionszeit hatte das Abwasser einen AOX-Gehalt von 1,8 mg/l.

## Patentansprüche

1. Verfahren zur katalytischen Behandlung von organische und gegebenenfalls anorganische Verbindungen enthaltenden Abwässern, vorzugsweise aus der Epichlorhydrinproduktion, die adsorbierbare organische Halogenverbindungen enthalten, in Gegenwart von Wasserstoff an einem geträgerten Edelmetallkatalysator, gekennzeichnet durch die Verwendung eines anorganischen Oxids und Kohlenstoff enthaltenden Katalysatorträgers.

2. Verfahren nach Anspruch 1, dadurch gekennzeichnet, daß ein Katalysatorträger verwendet wird, der vorzugsweise Oxide von Aluminium, Magnesium, Zirkon, Silicium oder Titan allein oder in Kombination miteinander enthält.

3. Verfahren nach Anspruch 1, dadurch gekennzeichnet, daß ein Katalysatorträger verwendet wird, der Siliciumdioxid enthält.

4. Verfahren nach Anspruch 1, dadurch gekennzeichnet, daß der Oxidanteil des Trägers mindestens 50 Gew.-%, vorzugsweise 55 bis 85 Gew.-%, beträgt.

5. Verfahren nach Anspruch 1, dadurch gekennzeichnet, daß Metalle der achten Nebengruppe, z. B. Platin, Palladium, Iridium oder Rhodium, vorzugsweise Palladium, allein oder in Kombination miteinander, als katalytisch wirkende Substanz eingesetzt werden.

6. Verfahren nach Anspruch 1, dadurch gekennzeichnet, daß ein Katalysatorträger verwendet wird, der durch ein Sol-Gel-Verfahren hergestellt wurde.

7. Verfahren nach Anspruch 1, dadurch gekennzeichnet, daß ein Träger verwendet wird, der unter Überführen eines Sols in tropfenförmige Solteilchen durch Einsprühen der Solteilchen von unten in ein Reaktionsgas und Auffangen der Solteilchen nach Durchfliegen einer gekrümmten Flugbahn in der Reaktionsflüssigkeit und anschließender Aufarbeitung der verfestigten Solteilchen unter Altern, Waschen, Trockner und Kalzinieren hergestellt wird.

8. Verfahren nach Anspruch 1, dadurch gekennzeichnet, daß der Wasserstoffeintrag durch direktes Einleiten von Wasserstoffgas erfolgt.

9. Verfahren nach Anspruch 1, dadurch gekennzeichnet, daß der Wasserstoffeintrag mittels eines Membranmoduls erfolgt.

10. Verfahren nach Anspruch 1, dadurch gekennzeichnet, daß das Abwasser mit einem pH-Wert von 3 bis 10, vorzugsweise 4 bis 6, in mindestens einen Reaktor, in dem sich der geträgerte Edelmetallkatalysator befindet, eingeleitet wird und bei 5 bis 80 °C, vorzugsweise bei 10 bis 30 °C und 1 bis 10 bar mit Wasserstoff behandelt wird.

## Claims

1. A method for the catalytic treatment of waste water containing organic and optionally inorganic compounds, preferably from epichlorohydrin production, which contain adsorbable organic halogen compounds, in the presence of hydrogen on a supported precious-metal catalyst, characterised by the use of an inorganic oxide and carbon-containing catalyst support.

2. A method according to Claim 1, characterised in that a catalyst support is used which preferably contains oxides of aluminium, magnesium, zirconium, silicon or titanium alone or in combination.

3. A method according to Claim 1, characterised in that a catalyst support is used which contains silicon dioxide.

4. A method according to Claim 1, characterised in that the oxide content of the support is at least 50% by weight, preferably 55 to 85% by weight.

5. A method according to Claim 1, characterised in that metals of the eighth subgroup, e.g. platinum, palladium, iridium or rhodium, preferably palladium, are used as catalytically active substance, alone or in combination with each other.

6. A method according to Claim 1, characterised in that a catalyst support is used which has been produced by a sol/gel process.

7. A method according to Claim 1, characterised in that a support is used which is produced by converting a sol into droplet-shaped sol particles by spraying the sol particles from below into a reaction gas and collecting the sol particles after passing through a curved trajectory in the reaction liquid and subsequent working-up of the solidified sol particles with ageing, washing drying and calcining.

8. A method according to Claim 1, characterised in that the introduction of hydrogen is effected by direct introduction of hydrogen gas.

9. A method according to Claim 1, characterised in that the introduction of hydrogen is effected by means of a membrane module.

10. A method according to Claim 1, characterised in that the waste water is introduced at a pH value of 3 to 10, preferably 4 to 6, into at least one reactor in which the supported precious-metal catalyst is located and is treated with hydrogen at 5 to 80°C, preferably at 10 to 30°C, and 1 to 10 bar.

## Revendications

1. Procédé de traitement catalytique d'eaux usées contenant des composés organiques et le cas échéant inorganiques, provenant de préférence de la production d'épichlorhydrine, qui contiennent des composés halogénés organiques adsorbables, en présence d'hydrogène sur un catalyseur en métal précieux sur support, caractérisé par l'utilisation d'un support de catalyseur contenant un oxyde inorganique et du carbone.

2. Procédé selon la revendication 1, caractérisé en ce qu'on utilise un support de catalyseur qui contient de préférence des oxydes d'aluminium, de magnésium, de zirconium, de silicium ou de titane, seuls ou en combinaison entre eux.

3. Procédé selon la revendication 1, caractérisé en ce qu'on utilise un support de catalyseur qui contient du dioxyde de silicium.

4. Procédé selon la revendication 1, caractérisé en ce que la proportion d'oxyde du support s'élève à au moins 50% en poids, de préférence à 55 à 85% en poids.

5. Procédé selon la revendication 1, caractérisé en ce qu'on utilise des métaux du huitième sous-groupe de la classification périodique des éléments, par exemple le platine, le palladium, l'iridium ou le rhodium, de préférence le palladium, seuls ou en combinaison entre eux, comme substance à action catalytique.

6. Procédé selon la revendication 1, caractérisé en ce qu'on utilise un support de catalyseur que l'on a préparé par un procédé sol-gel.

7. Procédé selon la revendication 1, caractérisé en ce qu'on utilise un support que l'on prépare en transformant un sol en particules de sol en forme de gouttelettes, par pulvérisation des particules de sol par en-dessous dans un gaz de réaction et reprise des particules de sol après traversée d'une trajectoire courbée dans le liquide réactionnel puis traitement des particules de sol solidifiées par vieillissement, lavage, séchage et calcination.

8. Procédé selon la revendication 1, caractérisé en ce que l'apport d'hydrogène se fait par introduction directe d'hydrogène gazeux.

9. Procédé selon la revendication 1, caractérisé en ce que l'apport d'hydrogène se fait au moyen d'un module à membrane.

10. Procédé selon la revendication 1, caractérisé en ce qu'on introduit l'eau usée à un pH de 3 à 10, de préférence de 4 à 6, dans au moins un réacteur dans lequel se trouve le catalyseur en métal précieux sur support, et en ce qu'on la traite avec l'hydrogène entre 5 et 80°C, de préférence entre 10 et 30°C et entre 1 et 10 bars.
